# EUROPEAN PATENT APPLICATION

(11) **EP 2 065 241 A1**
(43) Date of publication of application: **03.06.2009**
(21) Application number: 07791724.3
(22) Date of filing: 25.07.2007
(51) Int. Cl.: B60K 1/04, H01M 2/10, B60L 3/00

(54) **POWER SOURCE DEVICE**

(30) Priority: 19.09.2006 JP 2006252896
(71) Applicant: TOYOTA JIDOSHA KABUSHIKI KAISHA, Aichi-ken, 471-8571 (JP)
(72) Inventor: NAKAMURA, Yoshiyuki, Toyota-shi Aichi 471-8571 (JP); MUROTA, Atsushi, Toyota-shi Aichi 471-8571 (JP)
(74) Representative: TBK-Patent
(86) International application number: PCT/JP2007/065040
(87) International publication number: WO 2008/035511

(57) **Abstract**

A power source device mounted on a vehicle, having a battery pack (2). The battery pack (2) includes vertically stacked cells The battery pack (2) is placed under a front seat (120), positioned offset to the center in the lateral direction of the vehicle.

## Description

### Technical Field

The present invention relates to a power source device.

### Background Art

Electric vehicles, hybrid vehicles and fuel cell vehicles using an electric motor as a driving source have been known. In such a vehicle, a battery is mounted for supplying electricity as the energy, to the electric motor.

As a large capacity power source for a hybrid vehicle, an electric vehicle or the like, lithium ion secondary battery that can attain high energy density and high output density has been developed and used. When a lithium ion secondary battery is used in a hybrid vehicle or an electric vehicle, a plurality of unit cells (battery cells) are connected in series, in order to ensure high output. When battery cells are connected with a connecting member interposed, battery output lowers because of electric resistance of the connecting member. Further, as the ratio of volume occupied by the connecting member to the volume of the battery as a whole increases, output density and energy density of the battery lowers.

A bipolar battery is one of the batteries that can solve such a problem, and it allows reduction in resistance between battery cells and reduction in size. Generally, a bipolar battery has a structure in which a plurality of bipolar electrodes are stacked with electrolyte interposed. Here, a bipolar electrode means an electrode having a collector member formed as a sheet, with a cathode active material layer formed on one surface and an anode active material layer formed on the other surface of the collector member. The bipolar battery may have various shapes and, by way of example, it has a shape of a flat plate.

Japanese Patent Laying-Open No. 2005-005163 discloses a bipolar battery with the bipolar structure having at least one series-connected arrangement of cathode and anode as well as a detection tab, in which outside of battery elements is coated with at least one resin group. According to the disclosure, the bipolar battery is waterproof and, in addition, it newly comes to have air-tightness, vibration resistance and shock-resistance, as required of a power source mountable on a vehicle.

Japanese Patent Laying-Open No. 2003-300419 discloses a battery mounting structure for a vehicle, including a floor panel, a front seat arranged on the floor panel, and a vehicle battery pack arranged below the front seat. In the battery mounting structure for a vehicle, the vehicle battery pack has an exhaust port for discharging gas that cooled the vehicle battery pack. The exhaust port is arranged in vehicle compartment to be opposed to a left side of the vehicle. It is disclosed that the vehicle battery pack is arranged offset to the center of the vehicle, below the front seat. According to the disclosure, the battery mounting structure for a vehicle can be made simple.

Japanese Patent Laying-Open No. 2003-341373 discloses a power unit loading structure in which a power source device is arranged below a front passenger's seat and a driver's seat, and the front passenger's seat and the driver's seat are made slidable to a position where a service plug in the power source device can be removed. According to the disclosure, by the power unit loading structure, it becomes possible to remove the service plug simply by sliding the front passenger's seat or the driver's seat, without removing the front passenger's seat or the driver's seat.

A power source device mounted on an electric vehicle or the like that runs using an electric motor as a driving source has been arranged, for example, inside or below a trunk room. When the power source device is arranged inside the trunk room, the trunk room becomes smaller. If the trunk room is to be made larger, passenger compartment becomes smaller. Even when the power source device is placed below the trunk room, the bottom of trunk room is raised high and, therefore, the trunk room becomes smaller. In this manner, the power source device has been arranged by making smaller the space for an occupant or making smaller the space for luggage.

Among battery packs, a bipolar battery, for example, is **characterized in that** it allows reduction in size and requires small space when mounted on a vehicle. Arrangement of such a battery pack that can be reduced in size below the seat has been proposed, as disclosed, for example, in Japanese Patent Laying Open Nos. 2003-300419 and 2003-341373 mentioned above.

The space below the seat, however, is small and, in order to arrange the battery pack below the seat, it is necessary to efficiently cool the battery pack. Further, when the battery pack is arranged below the seat, it follows that the battery pack is arranged at a position close to a door. Therefore, a structure for preventing damage on severe external impact has been desired.

### Disclosure of the Invention

An object of the present invention is to provide a power source device having superior cooling characteristic and preventing damage to the battery pack from external impact.

The present invention provides a power source device mounted on a vehicle, including a battery pack. The battery pack has a plurality of battery cells stacked in a vertical direction. The battery pack is arranged below a seat. The battery pack is arranged offset to the center of the vehicle, in lateral direction of the vehicle. By this structure, a power source device having superior cooling characteristic and preventing damage to the battery pack from external impact can be provided.

Preferably, in the present invention, the power source device includes an electric auxiliary machine for electrically connecting the battery pack to an external electric circuit. The electric auxiliary machine is arranged on a side of the battery pack closer to outer side of the vehicle. By this structure, the cooling effect of the battery pack can further be improved. Further, as the electric auxiliary machine is provided outer than the battery pack, the electric auxiliary machine absorbs shock on impact, and hence, damage to the battery pack can better be prevented.

Preferably, in the present invention, the electric auxiliary machine includes a machine housing case, and a safety plug arranged exposed from the machine housing case. The safety plug is formed to shut off electric power from the battery pack when removed from the machine housing case. The safety plug is arranged on a side of the machine housing case, closer to outer side of the vehicle. Because of this structure, the safety plug can be pulled out easily.

Preferably, in the present invention, the battery pack includes a bipolar battery. The bipolar battery has high energy density and allows reduction in size. Further, it can be stacked. Therefore, the present invention is easily applicable.

According to the present invention, a power source device having superior cooling characteristic and preventing damage to the battery pack from external impact can be provided.

### Brief Description of the Drawings

Fig. 1 is a first schematic sectional view of a vehicle in accordance with an embodiment of the present invention cut along the vertical direction.
Fig. 2 is a schematic sectional view of the vehicle in accordance with the embodiment of the present invention cut along the horizontal direction.
Fig. 3 is a second schematic sectional view of a vehicle in accordance with an embodiment of the present invention cut along the vertical direction.
Fig. 4 is a schematic perspective view of the power source device in accordance with an embodiment.
Fig. 5 is a block diagram representing an electric circuit of the power source device in accordance with the embodiment.
Fig. 6 is a schematic perspective view of a battery pack in accordance with the embodiment.
Fig. 7 is a schematic sectional view of a stacked body of battery pack in accordance with the embodiment.
Fig. 8 is a schematic sectional view of an end portion of battery pack in accordance with the embodiment.
Fig. 9 is a schematic perspective view of the power source device of a comparative example.

### Best Modes for Carrying Out the Invention

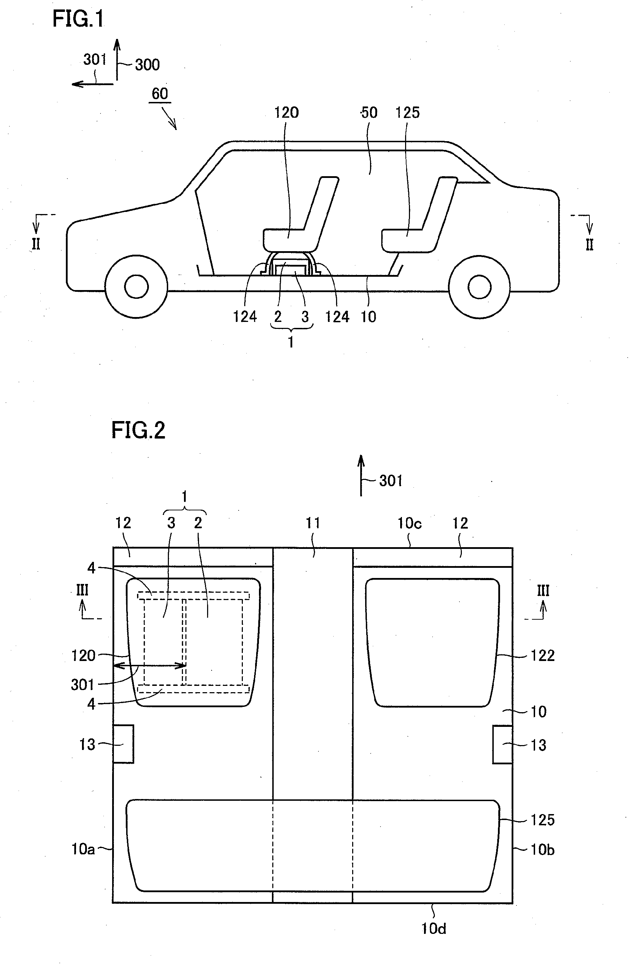

Referring to Figs. 1 to 9, the power source device in accordance with an embodiment of the present invention will be described. The power source device in accordance with the present embodiment is mounted on a vehicle.

Fig. 1 is a schematic sectional view of the vehicle of the present embodiment. The vehicle of the present embodiment is a so-called sedan type vehicle. The direction indicated by an arrow 300 is the vertically upward direction, and the direction indicated by an arrow 301 is the front side of the vehicle. The vehicle 60 has a compartment 50 as a space for those on board. Vehicle 60 has a floor panel 10 forming vehicle body. Vehicle 60 includes front seat 120 and rear seat 125. Front seat 120 is fixed on floor panel 10 by means of leg members 124.

The vehicle in accordance with the present embodiment includes a power source device 1. Power source device 1 is arranged inside compartment 50. Power source device 1 in accordance with the present embodiment is arranged below front seat 120. Power source device 1 includes a battery pack 2.

Battery pack 2 in accordance with the present embodiment is a bipolar battery. The bipolar battery is a secondary battery of small size and high capacity. A bipolar battery generally has a structure in which a plurality of bipolar electrodes are stacked with electrolyte interposed. The bipolar battery has a structure in which battery cells are stacked. The battery cell in accordance with the present embodiment is formed as a flat plate. The structure of battery pack 2 will be described in detail later.

Fig. 2 is a schematic sectional view of the vehicle in accordance with the embodiment. Fig. 2 is a cross-sectional view take along the line II-II of Fig. 1. The vehicle in accordance with the present embodiment includes a pair of front seats 120 and 122. Front seat 120 is a front passenger's seat, and front seat 122 is a driver's seat. Power source device 1 in accordance with the present embodiment is arranged below the front passenger's seat.

Floor panel 10 is formed as a plate. Floor panel 10 has a vehicle left side 10a, a vehicle right side 10b, a vehicle front side 10c and a vehicle rear side 10d. Floor panel 10 has a center tunnel 11 formed to extend from vehicle front side 10c to vehicle rear side 10d. Center tunnel 11 has a function of increasing strength of floor panel 10. Further, below center tunnel 11, a concave portion is formed, in which exhaust system components and various cables are housed.

The vehicle includes a cross member 12. Cross member 12 is formed to extend approximately orthogonal to the direction of extension of center tunnel 11, on floor panel 10. Cross member 12 is formed to extend from vehicle left side 10a to vehicle right side 10b. The vehicle includes center pillars (B pillar) 13. Center pillars 13 are formed on vehicle left side 10a and vehicle right side 10b of floor panel 10. Center pillars 13 are formed to extend substantially in the vertical direction.

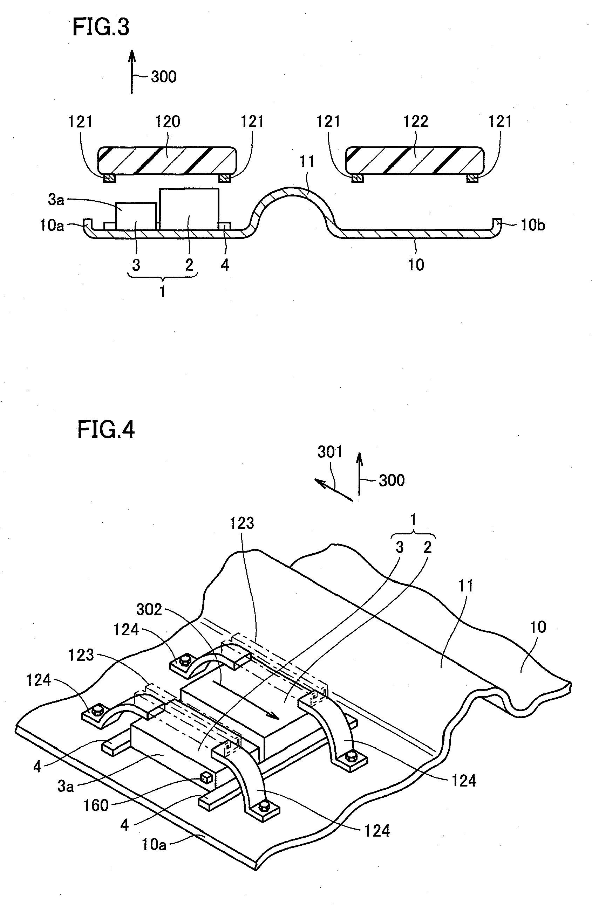

Fig. 3 is a cross-sectional view along the line III-III of Fig. 2. Center tunnel 11 is formed to protrude upward. In the present embodiment, center tunnel 11 is formed to have an arcuate cross section. Front seats 120 and 122 each has a seat rail 121. Seat rail 121 is formed to extend in the front/rear direction of the vehicle.

Fig. 4 is a schematic perspective view of the power source device portion in accordance with the present embodiment. Referring to Figs. 1 to 4, leg member 124 of front seat 120 fixed to floor panel 10 is curved when viewed from the side. On an upper surface of leg member 124, a guide rail 123 is fixed. Guide rail 123 is formed to engage with a seat rail 123 attached to front seat 120. As the seat rail 121 moves in the front/rear direction of the vehicle along the guide rail 123, front seat 120 moves.

Power source device 1 in accordance with the present embodiment is arranged in a space surrounded by four leg members 124. Power source device 1 is arranged in the space between front seat 120 and floor panel 10.

Power source device 1 in accordance with the present embodiment includes a battery pack 2. Battery pack 2 includes a plurality of battery cells stacked in the vertical direction, as will be described later. Battery pack 2 is fixed on floor panel 10. Battery pack 2 has its position defined as it is sandwiched between positioning members 4. Positioning members 4 are formed to extend in the lateral direction of the vehicle.

Battery pack 2 is arranged offset to the center of the vehicle in the lateral direction of the vehicle. When viewed two dimensionally, battery pack 2 is arranged on an area closer to the center of the vehicle, in the area below front seat 120. Battery pack 2 is arranged on one of the driver's seat area and the front passenger's seat area as divided by center tunnel 11, such that it is positioned closer to the center tunnel than the side end portion of floor panel. In the present embodiment, battery pack 2 is arranged such that it is closer to center tunnel 11 than to the vehicle left side 10a of floor panel 10. On the upper surface of battery pack 2, no equipment is placed, and there is formed a space between battery pack 2 and front seat 120.

Power source device 1 in accordance with the present embodiment has an electric auxiliary machine 3 for electrically connecting battery pack 2 to an external electric circuit. Electric auxiliary machine 3 is arranged on a side of battery pack 2 closer to the outer side of the vehicle. Electric auxiliary machine 3 is fixed on floor panel 10. Electric auxiliary machine 3 has its position defined as it is sandwiched between positioning members 4. Battery pack 2 and electric auxiliary machine 3 are arranged side by side in the lateral direction of the vehicle.

Electric auxiliary machine 3 includes electric components for connecting battery pack 2 to external electric circuits. Electric auxiliary machine 3 includes a machine housing case 3a, and the electric components are arranged in machine housing case 3a. Electric auxiliary machine 3 includes, as the electric components, a fuse and a relay, as will be described later. Electric auxiliary machine 3 includes a safety plug 160. Safety plug 160 is arranged to be exposed from machine housing case 3a. In the present embodiment, safety plug 160 is arranged on the machine housing case 3a of electric auxiliary machine 3, on a side closer to outer side of the vehicle. Safety plug 160 is arranged on a surface facing the outer side of vehicle, of the machine housing case 3a.

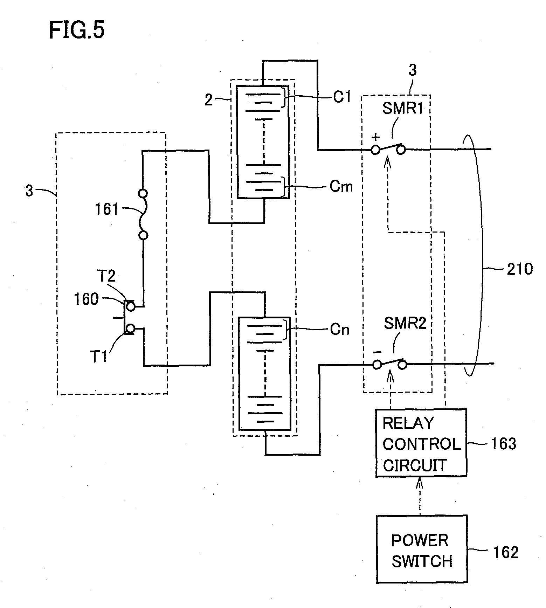

Fig. 5 is a block diagram representing circuitry of the battery pack and electric auxiliary machine in accordance with the present embodiment. Electric auxiliary machine 3 in accordance with the present embodiment includes a fuse 161, safety plug 160, and system main relays SMR1 and SMR2.

Battery pack 2 is formed by connecting in series a plurality of battery cells C1. Between battery cells Cm and Cn among the series-connected battery cells C1, fuse 161 and safety plug 160 are electrically connected. One end of fuse 161 is connected to an anode of battery cell Cm. Between the other end of fuse 161 and a cathode of battery cell Cn, safety plug 160 is connected.

When safety plug 160 is attached to electric auxiliary machine 3, terminals T1 and T2 are electrically connected by safety plug 160. Consequently, the plurality of battery cells C1 in battery pack 2 are connected in series, and electric power is output to a cable 210. When safety plug 160 is removed, terminals T1 and T2 are electrically disconnected and, therefore, electric power is not output to cable 210 connected to battery pack 2.

System main relay SMR1 is arranged in the middle of an electric path between a positive terminal of battery pack 2 and cable 210. System main relay SMR2 is arranged in the middle of an electric path between a negative terminal of battery pack 2 and cable 210. When a power switch (main switch) 162 is on, a relay control circuit 163 turns on the system main relays SMR1 and SMR2. Consequently, battery pack 2 and cable 210 are connected. When power switch 162 is off, relay control circuit 163 turns off system main relays SMR1 and SMR2. Consequently, output path from battery pack 2 to cable 210 is shut off.

Power switch 162 is provided in the compartment and operated, by way of example, by a driver. In the present embodiment, as a device that can shut off the output path of battery pack 2 by a manual operation of a person on board, safety plug 160 is arranged in the compartment, in addition to the power switch 162. In case of an accident of the vehicle, even if relay control circuit 163 fails and output path of battery pack 2 cannot be shut off by the operation of power switch 162, the output path of battery pack 2 can easily be shut off by a person pulling out the safety plug 160.

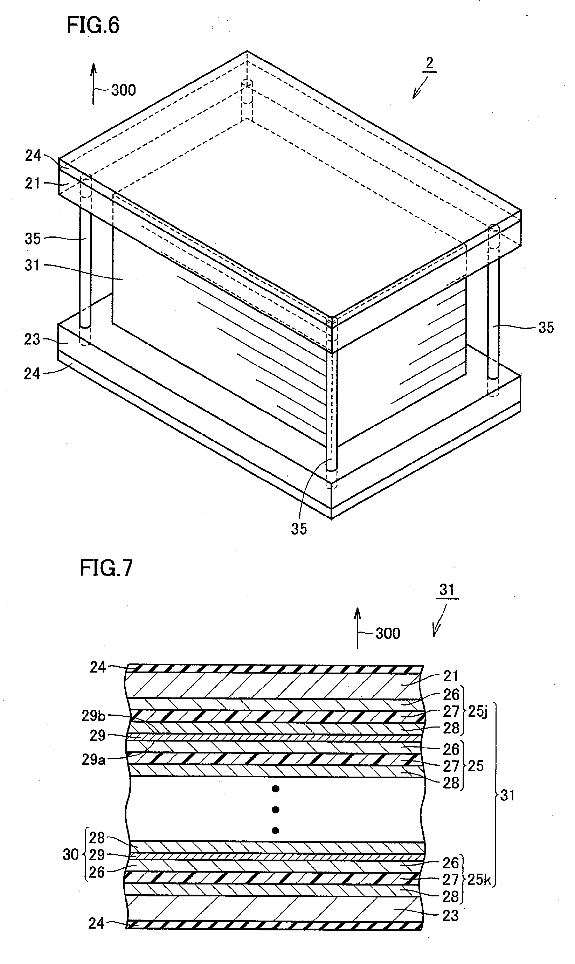

Next, the bipolar battery as the battery pack in accordance with the present embodiment will be described in detail, with reference to Figs. 6 to 8.

Fig. 6 is a schematic perspective view of the battery pack in accordance with the present embodiment. Battery pack 2 in accordance with the present embodiment includes a stacked body 31, a negative collector plate 21 and a positive collector plate 23. Stacked body 31 is held between negative collector plate 21 and positive collector plate 23. Negative collector plate 21 and positive collector plate 23 are fixed to each other by a fixing member 35. On the surface of each collector plate of negative collector plate 21 and positive collector plate 23, an insulating film 24 is arranged. By the insulating film 24, insulation between vehicle body and battery pack 2 is established.

Arrow 300 represents vertical upward direction. In the battery pack 2 of the present embodiment, negative collector plate 21 is arranged on the upper side and positive collector plate 23 is positioned on the lower side.

Fig. 7 is an enlarged schematic sectional view of the stacked body in accordance with the present embodiment. Stacked body 31 includes a plurality of battery cells 25. Battery cells 25 in accordance with the present embodiment are stacked vertically as represented by arrow 300. A battery cell 25 includes a cathode active material layer 28 serving as a cathode, an anode active material layer 26 serving as an anode, and an electrolyte layer 27 interposed between cathode active material layer 28 and anode active material layer 26.

Electrolyte layer 27 is formed of a material having ion conductivity. Electrolyte layer 27 may be solid electrolyte, or gel electrolyte. By interposing electrolyte layer 27, ion conduction between cathode active material layer 28 and anode active material layer 26 becomes smooth, and output of bipolar battery can be improved.

The plurality of battery cells 25 are stacked such that cathode active material layer 28 and anode active material layer 26 oppose to each other at positions where the layers extend next to each other in the stacking direction. Between each of the plurality of battery cells 25, a sheet type collector foil 29 is provided. Cathode active material layer 28 is formed on one surface 29b and anode active material layer 26 is formed on the other surface 29a, of collector foil 29. Cathode active material layer 28 and anode active material layer 26 are formed, for example, by sputtering on the surfaces of collector foil 29.

A set of cathode active material layer 28, collector foil 29 and anode active material layer 26 arranged between electrolyte layers 27 adjacent to each other in the stacking direction of battery sheets 25 constitute a bipolar electrode 30. In the bipolar battery, both the cathode active material layer 28 serving as the cathode and the anode active material layer 26 serving as the anode are formed in one bipolar electrode 30.

The plurality of battery cells 25 include a battery cell 25j positioned on the side closest to an anode collector plate 21 and a battery cell 25k positioned on the side closest to a cathode collector plate 23. Battery cell 25j is provided such that anode active material layer 26 is arranged at the end on the side of anode collector plate 21. Battery cell 25k is provided such that cathode active material layer 28 is arranged at the end on the side of cathode collector plate 23. Thus, anode collector plate 21 is in contact with anode active material layer 26 of battery cell 25j, and cathode collector plate 23 is in contact with cathode active material layer 28 of battery cell 25k.

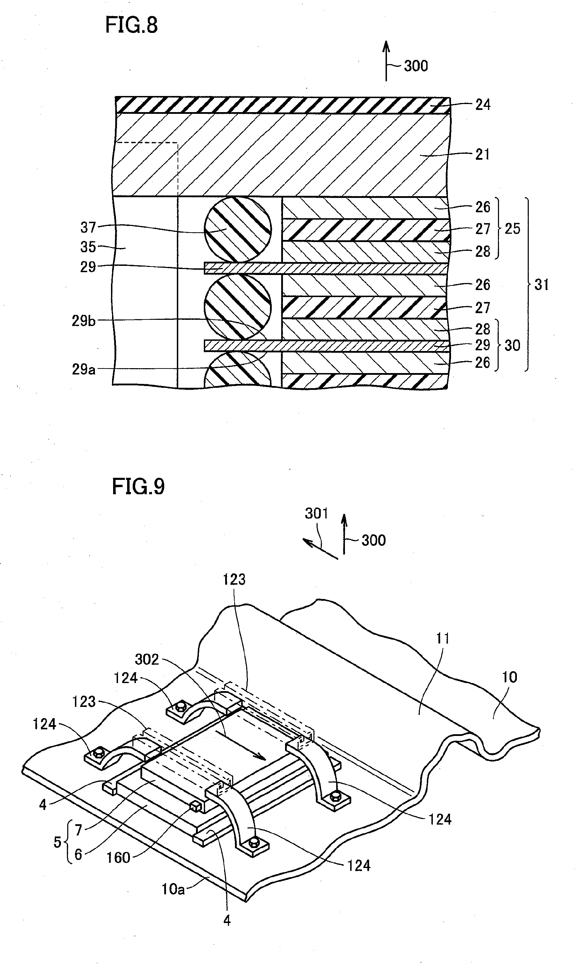

Fig. 8 is a schematic sectional view of an end portion of battery pack in accordance with the present embodiment. At an end portion of the battery pack, a ringshaped seal member 37 is arranged. Seal member 37 is arranged between collector foils 29 adjacent in the stacking direction, of battery cells 25. Seal member 37 separates the space in which electrolyte layer 27 is formed from fixing member 35.

Arrangement of seal member 37 prevents leakage of electrolyte layer 27. If electrolyte layer 27 is formed of solid electrolyte, seal member 37 need not be provided. Alternatively, stacked body 31 may be tightly sealed in a case. In place of seal member 37, an insulating material may be arranged around stacked body 31. By way of example, outer circumference of stacked body 31 may be resin-sealed.

Next, each of the components forming the bipolar battery will be described in detail. Collector foil 29 is formed, by way of example, of aluminum. Here, even if the active material layer provided on the surface of collector foil 29 contains solid polymer electrolyte, it is possible to ensure sufficient mechanical strength of collector foil 29. Collector foil 29 may be formed by providing aluminum coating on metal other than aluminum, such as copper, titanium, nickel, stainless steel (SUS) or an alloy of these.

Cathode active material layer 28 includes a cathode active material and a solid polymer electrolyte. Cathode active material layer 28 may contain a supporting electrolyte (lithium salt) for improving ion conductivity, a conduction assistant for improving electron conductivity, NMP (N-methyl-2-pyrolidone) as a solvent for adjusting slurry viscosity, AIBN (azobisisobutyronitrile) as a polymerization initiator or the like.

As the cathode active material, composite oxide of lithium and transition metal generally used in a lithium ion secondary battery may be used. Examples of the cathode active material may include Li/Co based composite oxide such as LiCoO₂, Li/Ni based composite oxide such as LiNiO₂, Li/Mn based composite oxide such as spinel LiMn₂O₄, and Li/Fe based composite material such as LiFeO₂. Other examples are sulfated compound or phosphate compound of lithium and transition metal such as LiFePo₄; sulfide or oxide of transition metal such as V₂O₅, MnO₂, TiS₂, MoS₂ and MoO₃; PbO₂, AgO, NiOOH and the like.

The solid polymer electrolyte is not specifically limited and it may be any ion-conducting polymer. For example, polyethylene oxide (PEO), polypropylene oxide (PPO) or copolymer of these may be available. Such a polyalkylene oxide based polymer easily dissolves lithium salt such as LiBF₄, LiPF₆, LiN(SO₂CF₃)₂, or LiN(SO₂C₂F₅)₂. The solid polymer electrolyte is included in at least one of cathode active material layer 28 and anode active material layer 26. More preferably, the solid polymer electrolyte is included both in cathode active material layer 28 and anode active material layer 26.

As the supporting electrolyte, Li(C₂F₅SO₂)₂N, LiBF₄, LiPF₆, LiN(SO₂C₂F₅)₂ or a mixture of these may be used. As the electron conduction assistant, acethylene black, carbon black, graphite or the like may be used.

Anode active material layer 26 includes an anode active material layer and a solid polymer electrolyte. Anode active material layer may contain a supporting electrolyte (lithium salt) for improving ion conductivity, a conduction assistant for improving electron conductivity, NMP (N-methyl-2-pyrolidone) as a solvent for adjusting slurry viscosity, AIBN (azobisisobutyronitrile) as a polymerization initiator or the like.

As the anode active material layer, a material generally used in a lithium ion secondary battery may be used. If a solid electrolyte is used, however, it is preferred to use a composite oxide of carbon or lithium and metal oxide or metal, as the anode active material. More preferably, the anode active material is formed of a composite oxide of carbon or lithium and transition metal. Further preferably, the transition metal is titanium. Specifically, it is more preferred that the anode active material is of a composite oxide of titanium and lithium or a titanium oxide.

As the solid electrolyte forming electrolyte layer 27, by way of example, a solid polymer electrolyte such as polyethylene oxide (PEO), polypropylene oxide (PPO) or copolymer of these may be used. The solid electrolyte contains supporting electrolyte (lithium salt) for ensuring ion conductivity. As the supporting salt, LiBF₄, LiPF₆, LiN(SO₂CF₃)₂, LiN(SO₂C₂F₅)₂ or a mixture of these may be used.

Specific examples of materials for cathode active material layer 28, anode active material layer 26 and electrolyte layer 27 are listed in Tables 1 to 3. Table 1 shows specific examples when electrolyte layer 27 is of an organic solid electrolyte, Table 2 shows specific examples when electrolyte layer 27 is of an inorganic solid electrolyte, and Table 3 shows specific examples when electrolyte layer 27 is of a gel electrolyte.

**Table 1**

| Cathode material | Anode material | Solid electrolyte | Remarks |
|---|---|---|---|
| LiMn₂O₄ | Li metal | P(EO/MEEGE) | electrolyte salt:LiBF ₄ |
| - | Li metal | P(EO/PEG-22) | electrolyte salt:LiN(CF ₃So₂)₂(LiTFSI) |
| LiCoO₂ | carbon | PVdF base | - |
| LiCoO₂ | Li metal | ether based polymer P(EO/EM/AGE) | electrolyte salt:LiTFSI |
| | | | ion conducting material binder:mix P(EO/EM)+LiBF₄ to cathode |
| Li_{0.33}MnO₂ | Li metal | P(EO/EM/AGE) | electrolyte salt:LiTFSI |
| | | | ion conducting material bindermix PEO-based solid polymer+LiTFSI to cathode |
| LI_{0.33}MnO₂ | Li metal | PEO base+inorganic additive | electrolyte salt:LiClO₄ |
| | | | ion conducting material:mix KB+PEG+LiTFSI to cathode |
| - | - | PEG-PMMA+PEG-borate ester | electrolyte salt:LiTFSI BGBLI |
| - | - | PEO base +10mass%0.6Li ₂S+0.4SiS₂ | electrolyte salt:LiCF ₃SO₃ |
| - | Li metal | PEO base+ perovskite type La _{0.55}Li_{0.35}TiO₃ | electrolyte salt:LiCF ₃SO₃ |
| Li metal | - | styrene/ethylene oxide-block-graft polymer(PSEO) | ion conducting material:mix KB+PVdF+PEG+LiTFSI to cathode |
| LiCoO₂ | Li metal | P(DMS/EO)+polyether cross link | - |
| Li_{0.33}MnO₂ Li metal | | prepolymer composition mainly consisting of urethane | electrolyte salt:LiTFSI |
| | | acrylate (PUA) | ion conducting material:mix KB+PVdF+PEG+LiTFSI to cathode |
| - | - | multibranched graft polymer (MMA+CMA+POEM) | electrolyte salt:LiClO₄ |
| LiNi_{0.8}Co_{0.2}O₂ | Li metal | PEO/multibranched polymer/filler based composite solid | electrolyte salt:LiTFSI |
| | | electrolyte (PEO+HBP+BaTiO ₃) | mix SPE+AB to cathode |
| - | - | PME400+13 group metal alkoxide (as Lewis acid) | electrolyte salt:LiCl |
| - | - | matrix containing poly (N-methylvinylimidazoline) (PNMVI) | electrolyte salt:LiClO ₄ |
| LiCoO₂ | Li metal | polymerize methoxy polyethylene glycol monomethyl meso acrylate using ruthenium complex by living radical polymerization, further polymerize with styrene | electrolyte salt:LiClO ₄ cathode conducting material KB+ binder PVdF |
| LiCoO₂ | Li metal | P(EO/EM)+ether based plasticizer | electrolyte salt:LiTFSI |
| | | | cathode conducting material KB+ binder PVdF |

**Table 2**

| Cathode material | Anode material | Solid Electrolyte | Remarks |
|---|---|---|---|
| LiCoO₂ | In | 95(0.6Li₂S 0.4SiS₂) 5Li₄SiO₄ (Li₂S-SiS₂ based melt rapid cooled glass) | state:glass |
| - | - | 70Li₂S 30P₂S₅Li_{1.4}P_{0.6}S_{2.2}sulfide glass | state:glass |
| | | (Li₂S-P₂S₅ based glass ceramics) | forming method:mechanochemical |
| - | - | Li_{0.35}La_{0.55}TiO₃(LLT) (perovskite type structure) | state:ceramics |
| | | | form solid electrolyte porous body, fill pores with active material sol |
| - | - | 80Li₂S 20P₂S₅ | state:glass |
| | | (Li₂S-P₂S₅ based glass ceramics) | forming method:mechanochemical |
| - | - | xSrTiO₃ (1-x)LiTaO₃ (perovskite type oxide) | state:ceramics |
| LiCoO₂ | Li-In metal | Li_{3.4}Si_{0.4}P_{0.6}S₄ (thio-LISICON Li ion conductor) | state:ceramics |
| - | - | (Li_{0.1}La_{0.3})ₓZr_{y}Nb_{1-y}O₃ (perovskite type oxide) | state:ceramics |
| - | - | Li₄B₇O₁₂Cl | state:ceramics |
| | | | combine PEG as organic compound |
| - | - | Li₄GeS₄-Li₃PS₄ based crystal Li _{3.25}Ge_{0.25}P_{0.75}S₄ (thio-LISICON Li ion conductor) | state:ceramics |
| - | Li metal In metal | 0.01Li₃PO₄-0.63Li₂S-0.36SiS₂ (thio-LISICON Li ion conductor) | state:ceramics |
| LiCoO₂ LiFePO₄ LiMn_{0.6}Fe_{0.4}PO₄ | Li metal V₂O₅ | Li₃PO₄₋ₓNₓ(LIPON) (lithium phosphate oxynitride glass) | state:glass |
| LiNi_{0.8}Co_{0.15} Al_{0.05}O₂ | Li metal | Li₃InBr₃Cl₃ (rock salt type Li ion conductor) | state:ceramics |
| - | - | 70Li₂S (30-x)P₂S₅ xP₂O₅ (Li₂S-P₂S₅-P₂O₅ based glass ceramics) | state:glass |
| LiCoO₂ etc. | Li metal Sn based | Li₂O-B₂O₃-P₂O₅ base Li₂O-V₂O₅-SiO₂ base Li₂O- Ti₂O-P₂O₅ base LVSO etc. | state:glass |
| - | - | LiTi₂(PO₃)₄(LTP) (NASICON type structure) | state:ceramics |

**Table 3**

| Cathode material | Anode material | Polymer base | Remarks |
|---|---|---|---|
| Ni based collector | Li metal | acrylonitrile vinyl acetate | solvent:EC+PC |
| | | (PAN-VAc based gel electrolyte) | electrolyte salt:LiBF ₄ LiPF₆ LiN(CF₃SO₂)₂ |
| lithium electrode | lithium electrode | triethylene glycolmethyl methacrylate (polymethyl methacrylate (PMMA) based gel electrolyte) | solvent:EC+PC |
| | | | electrolyte salt:LiBF ₄ |
| V₂O₅/PPy composite body | Li metal | methyl methacrylate (PMMA gel electrolyte) | solvent:EC+DEC |
| | | | electrolyte salt:LiClO ₄ |
| Li metal | Li metal | PEO/PS polymer blend gel electrolyte | solvent:EC+PC |
| | | | electrolyte salt:LiClO ₄ |
| Li metal | Li metal | alkylene oxide based polymer electrolyte | solvent:PC |
| | | | electrolyte salt:LiClO ₄ |
| Li metal & LiCoO₂ | Li metal | alkylene oxide based polymer electrolyte | solvent:EC+GBL |
| | | | electrolyte salt:LiBF ₄ |
| Li metal | Li metal | polyolefin based base polymer | solvent:EC+PC |
| | | | electrolyte salt:LiBF ₄ |
| Li_{0.36}CoO₂ | Li metal | polyvinylidenefluoride (PVdF) + propylene hexafluoride (HFP) (PVdF-HFP gel electrolyte) | solvent:EC+DMC |
| | | | electrolyte salt:LiN(CF ₃SO₂)₂ |
| LiCoO₂ | Li metal | PEO based and aclyl based polymer | solvent:EC+PC |
| | | | electrolyte salt:LiBF ₄ |
| Li metal | Li metal | trimethylol propane ethoxylate acrylate (ether based polymer) | solvent:PC |
| | | | electrolyte salt:LiBETI LiBF₄ LiPF₆ |
| - | - | EO-PO copolymer | electrolyte salt:LiTFSI LiBF₄ LiPF₆ |
| - | - | poly aziridine compound poly aziridine compound | solvent:EC+DEC electrolyte salt:LIPF |
| | | | ₆ |
| - | PAS (polyacene) | PVdF-HFP gel electrolyte | solvent:PC EC+DEC |
| | | | electrolyte salt:LiClO ₄ Li(C₂F₅SO₂)₂N |
| - | - | urea based lithium polymer gel electrolyte | solvent:EC+DMC |
| | | | electrolyte salt:LiPF ₆ |
| - | - | polyether/polyurethane based (PEO-NCO) gel electrolyte | solvent:PC |
| | | | electrolyte salt:LiClO ₄ |
| - | - | cross-linked polyalkylene oxide based gel polymer electrolyte | - |

Fig. 9 is a schematic perspective view of the power source device as a comparative example to the present embodiment. A power source device 5 as a comparative example includes a battery pack 6 and an electric auxiliary machine 7. Power source device 5 is arranged on an area sandwiched by leg members 124 of the front seat. Power source device 5 is arranged in a space between floor panel 10 and the front seat.

Battery pack 6 of power source device 5 as the comparative example is formed to have a large area when viewed two dimensionally and to have lower height. Output voltage of battery pack 6 is the same as the output voltage of battery pack 2 of the present embodiment. Further, capacity of battery pack 6 of the comparative example is the same as the capacity of battery pack 2 in accordance with the present embodiment.

Battery pack 6 of the comparative example is formed to extend in the horizontal direction, and has a large area when viewed two dimensionally. Battery pack 6 of the comparative example is formed, when viewed two dimensionally, to extend substantially entirely over the area on the side of center tunnel 11 in the lateral direction of the vehicle. In power source device 5 of the comparative example, electric auxiliary machine 7 is mounted on an upper surface of battery pack 6. Electric auxiliary machine 7 is formed thin.

In power source device 5 as the comparative example, lower surface of battery pack 6 is in contact with floor panel 10. Heat is radiated from the lower surface of battery pack 6 to floor panel 10. The air, however, flows between electric auxiliary machine 7 and the front seat as represented by an arrow 302, and the flowing air hardly contacts the upper surface of battery pack 6. Further, as electric auxiliary machine 7 is placed on the upper surface of battery pack 6, heat radiation from battery pack 6 is hindered. The device has a problem that cooling performance is poor at the upper surface of battery pack 6.

Referring to Figs. 1 to 4, the power source device in accordance with the present embodiment includes battery pack 2, and the battery pack is arranged offset to the center of the vehicle. Battery pack 2 is formed to have a small area when viewed two-dimensionally and to have a high height, as the battery cells are stacked in the vertical direction. On a side of battery pack 2 closer to the outer side of vehicle, a large space is formed, in which electric auxiliary machine 3 is arranged.

Referring to Fig. 4, battery pack 2 in accordance with the present embodiment can effectively be cooled, as the heat is radiated from the lower surface to the floor panel 10. There is a space formed above battery pack 2 and, as represented by an arrow 302, air flows along the upper surface of battery pack 2. The upper surface of battery pack 2 is in contact with the flowing air. Thus, the upper surface of battery pack 2 is cooled. Specifically, as the space is formed between battery pack 2 and front seat 120, air flows through this space and the upper surface of battery pack 2 can efficiently be cooled. In this manner, battery pack 2 can effectively be cooled.

Referring to Figs. 1 to 4, it is possible that there is a severe impact on the vehicle body near battery pack 2, when a car crushes from the left side 10a of the vehicle, or the vehicle collides, at the left side 10a, against a building. In the present embodiment, battery pack is arranged offset to the center of the vehicle and therefore, a large space is formed on the side of battery pack 2. This space serves as a crushable zone. Therefore, even when there is a severe shock from the side, damage to battery pack 2 can be decreased.

Further, in the power source device in accordance with the present embodiment, the electric auxiliary machine is arranged outer than the battery pack in the vehicle. The electric auxiliary machine is arranged in the crushable zone. When there is a hard side impact, the shock is first received by the electric auxiliary machine, before reaching the battery pack. Therefore, the electric auxiliary machine absorbs the collision energy, and the shock transferred to the battery pack can be reduced. As a result, damage to the battery pack can be decreased. The electric auxiliary machine connected to the battery pack may include a plurality of high-voltage components. In that case, the high-voltage components are arranged spaced from each other. Therefore, there is much space in the electric auxiliary machine. Such space enables more efficient absorption of collision energy received from the side.

Further, in the present embodiment, the safety plug is arranged on the machine housing case of electric auxiliary machine, on a side closer to the outer side of the vehicle. Because of this structure, it becomes possible to easily pull out the safety plug, by inserting one's hand between the front panel and the front seat.

Though a battery pack including a bipolar battery has been described as an example, the invention is not limited to such an embodiment. What is necessary is that the battery pack includes a plurality of stacked battery cells. For example, the battery pack may be an all-solid battery.

In the present embodiment, on the side of battery pack, equipment including a fuse and relays is arranged as the electric auxiliary machine. The invention is not limited to such an embodiment, and arbitrary equipment may be arranged. For example, the power source device may include a cooling apparatus for cooling the battery pack, and the cooling apparatus may be arranged on the side of the battery pack.

In the battery pack in accordance with the present embodiment, a stacked body having stacked sheets arranged in one column has been described as an example. The invention is not limited to such an embodiment, and the stacked sheets may be arranged in a plurality of columns. Further, the method of electrical connection of battery cells is not limited, and an arbitrary number of battery cells may be connected in series or in parallel.

Further, though the safety plug of the present embodiment is formed to shut off electrical conduction by inserting an electric circuit in the middle of the stacked body, the invention is not limited to such an embodiment. The safety plug may be arbitrarily formed as long as it can shut off the electric power supplied by the battery pack.

Further, though the battery pack in accordance with the present embodiment is arranged to have the negative collector plate on the upper side, the invention is not limited to such an embodiment. It may be arranged with the positive collector plate arranged on the upper side.

Further, though the power source device is arranged on the lower side of front passenger's seat of the front seats, the invention is not limited to such an embodiment. The power source device may be arranged below the driver's seat. Further, the power source device may be arranged below a rear passenger's seat.

In the figures described above, the same or corresponding portions are denoted by the same reference characters.

The embodiments as have been described here are mere examples and should not be interpreted as restrictive. The scope of the present invention is determined by each of the claims with appropriate consideration of the written description of the embodiments and embraces modifications within the meaning of, and equivalent to, the languages in the claims.

### Industrial Applicability

The present invention is suitably applied to a power source device.

## Claims

1. A power source device (1) mounted on a vehicle, comprising
a battery pack (2); wherein
said battery pack (2) has a plurality of battery cells (C1) stacked in a vertical direction;
said battery pack (2) is arranged below a seat; and
said battery pack (2) is arranged offset to the center of the vehicle, in lateral direction of said vehicle.

2. The power source device according to claim 1, comprising
an electric auxiliary machine (3) for electrically connecting said battery pack (2) to an external electric circuit; wherein
said electric auxiliary machine (3) is arranged on a side of said battery pack (2) closer to outer side of the vehicle.

3. The power source device according to claim 1, wherein
said electric auxiliary machine (3) includes
a machine housing case (3a), and
a safety plug (160) arranged exposed from said machine housing case (3a);
said safety plug (160) is formed to shut off electric power from said battery pack (2) when removed from said machine housing case (3 a); and
said safety plug (160) is arranged on a side of said machine housing case (3a), closer to outer side of the vehicle.

4. The power source device according to claim 1, wherein
said battery pack (2) includes a bipolar battery.
